(19) Europäisches Patentamt
European Patent Office
Office européen des brevets

(11) **EP 3 819 632 B1**

(12) **FASCICULE DE BREVET EUROPEEN**

(45) Date de publication et mention de la délivrance du brevet:
**24.08.2022 Bulletin 2022/34**

(21) Numéro de dépôt: **20202760.3**

(22) Date de dépôt: **20.10.2020**

(51) Classification Internationale des Brevets (IPC):
**G01N 27/447** (2006.01)

(52) Classification Coopérative des Brevets (CPC):
(C-Sets disponibles)
**G01N 27/4473; G01N 27/44747** (Cont.)

(54) **UTILISATION D'UN COMPLEXE DE NOTA COMME MARQUEUR DE LA MOBILITÉ ÉLECTROOSMOTIQUE LORS DE L UTILISATION DE L ÉLECTROPHORÈSE CAPILLAIRE EN COUPLAGE AVEC UN SPECTROMÈTRE OPTIQUE OU DE MASSE**

VERWENDUNG EINES NOTA-KOMPLEXES ALS MARKER DER ELECTROOSMOTISCHEN MOBILITÄT UNTER VERWENDUNG DER MIT EINEM OPTISCHEN- ODER MASSENSPEKTROMETER GEKOPPELTEN KAPPILARELEKTROPHORESE

USE OF A NOTA-COMPLEX AS ELECTROOSMOTIC MOBILITY MARKER DURING USE OF CAPILLARY ELECTROPHORESIS COUPLED WITH AN OPTICAL OR MASS SPECTROMETER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.11.2019 FR 1912402**

(43) Date de publication de la demande:
**12.05.2021 Bulletin 2021/19**

(73) Titulaire: **Commissariat à l'énergie atomique et aux énergies alternatives 75015 Paris (FR)**

(72) Inventeurs:
• **CHARTIER, Frédéric**
**92260 FONTENAY-AUX-ROSES (FR)**
• **DUPUIS, Erwan**
**91440 BURES SUR YVETTE (FR)**
• **ISNARD, Isabelle**
**92160 ANTONY (FR)**
• **VIO, Laurent**
**01120 DAGNEUX (FR)**

(74) Mandataire: **Brevalex**
**95, rue d'Amsterdam**
**75378 Paris Cedex 8 (FR)**

(56) Documents cités:
**US-A1- 2006 246 530**

• **HOLTKAMP HANNAH U ET AL: "Cobalt complexes as internal standards for capillary zone electrophoresis-mass spectrometry studies in biological inorganic chemistry", JBIC. JOURNAL OF BIOLOGICAL INORGANIC CHEMISTRY, SPRINGER, DE, vol. 22, no. 5, 2 janvier 2017 (2017-01-02), pages 789-798, XP036258172, ISSN: 0949-8257, DOI: 10.1007/S00775-016-1426-Z [extrait le 2017-01-02]**
• **DAIKI GOTO ET AL: "Affinity capillary electrophoresis for selective control of electrophoretic mobility of sialic acid using lanthanide-hexadentate macrocyclic polyazacarboxylate complexes", ANALYTICAL SCIENCES, vol. 31, 10 novembre 2015 (2015-11-10), pages 1143-1149, XP055709322, DOI: https://doi.org/10.2116/analsci.31.1143**
• **BRACKE NATHALIE ET AL: "Analytical characterization of NOTA-modified somatropins", JOURNAL OF PHARMACEUTICAL AND BIOCHEMICAL ANALYSIS, ELSEVIER B.V, AMSTERDAM, NL, vol. 96, 20 mars 2014 (2014-03-20), pages 1-9, XP029021047, ISSN: 0731-7085, DOI: 10.1016/J.JPBA.2014.03.014**

EP 3 819 632 B1

(52) Classification Coopérative des Brevets (CPC):
(Cont.)

C-Sets
G01N 27/4473, G01N 30/72

**Description**

**DOMAINE TECHNIQUE**

La présente invention concerne le domaine de la chimie analytique et en particulier le domaine de l'analyse de spéciation.

L'invention concerne en effet l'utilisation d'un complexe particulier qui va permettre une détermination précise de la mobilité électroosmotique des analytes présents dans une solution, cette solution étant analysée par couplage d'une technique de séparation et d'une technique de détection particulières.

**ÉTAT DE LA TECHNIQUE ANTÉRIEURE**

Dans de nombreux domaines comme notamment les sciences du vivant, l'industrie nucléaire ou encore l'analyse environnementale, il est nécessaire de connaître la composition élémentaire d'échantillons variés.

En plus de connaître la concentration d'un élément chimique dans un échantillon, il peut en outre être nécessaire de connaître la nature et la proportion relative des espèces chimiques dans lesquelles cet élément chimique est présent, c'est-à-dire connaître la spéciation de l'échantillon. On rappelle que le principe des analyses de spéciation est d'identifier et de doser les différentes formes chimiques des éléments dans un environnement donné. La connaissance de la spéciation d'un échantillon permet en effet d'appréhender le comportement chimique des éléments dans des conditions données, par exemple dans des conditions environnementales ou dans des conditions biologiques.

De nombreuses techniques d'analyse de spéciation sont non couplées (TRLIF (pour « Time-resolved laser induced fluorescence » en anglais), UV, IR, etc.). Certaines techniques d'analyse de spéciation mettent en œuvre une étape de séparation (généralement réalisée par chromatographie ou par électrophorèse capillaire), suivie d'une étape de détection (généralement réalisée par spectrométrie).

Dans le cadre de la présente invention, nous nous intéressons à l'utilisation, en couplage, d'une étape de séparation par électrophorèse capillaire (notée « CE » pour l'acronyme anglais « Capillary Electrophoresis ») et d'une étape de détection à l'aide, au choix, d'un spectromètre de masse à source plasma à couplage inductif (dit spectromètre « ICP-MS » selon l'acronyme anglais pour « Inductively Coupled Plasma Mass Spectrometry »), d'un spectromètre d'émission atomique (on parle alors indifféremment d'ICP-optique, d'ICP-AES (pour « ICP atomic emission spectrometry » en anglais) ou d'ICP-OES (pour « ICP optical emission spectrometry » en anglais}) ou d'un spectromètre de masse à source électrospray (dit spectromètre « ESI-MS » pour « ElectroSpray Ionisation Mass Spectrometry »).

Quel que soit le spectromètre de masse choisi, le couplage avec l'électrophorèse capillaire est direct. Dans le cas d'un couplage CE-ICP-MS, par exemple, comme le couplage est direct, la sortie de l'électrophorèse capillaire est située directement en entrée de l'ICP-MS.

Pour rappel, en électrophorèse capillaire, l'échantillon à analyser est injecté à l'une des extrémités d'un capillaire de très faible diamètre interne, rempli d'une solution appelée électrolyte de séparation. Une forte différence de potentiel (plusieurs milliers de volts) est ensuite appliquée entre les extrémités de ce capillaire. Les analytes présents en solution dans l'électrolyte de séparation vont migrer dans le capillaire à des vitesses différentes en fonction de leur charge et de leur rayon hydrodynamique, c'est-à-dire le rayon qu'occupe l'espèce chimique (également appelé analyte) en solution. Avant analyse, l'échantillon est introduit dans le capillaire rempli d'électrolyte de séparation par application d'une pression sur le réservoir d'entrée. Lors de l'application d'une tension entre les deux électrodes, les espèces chargées à analyser se séparent suivant leur mobilité apparente et les espèces séparées sont ensuite détectées à l'aide d'un détecteur approprié.

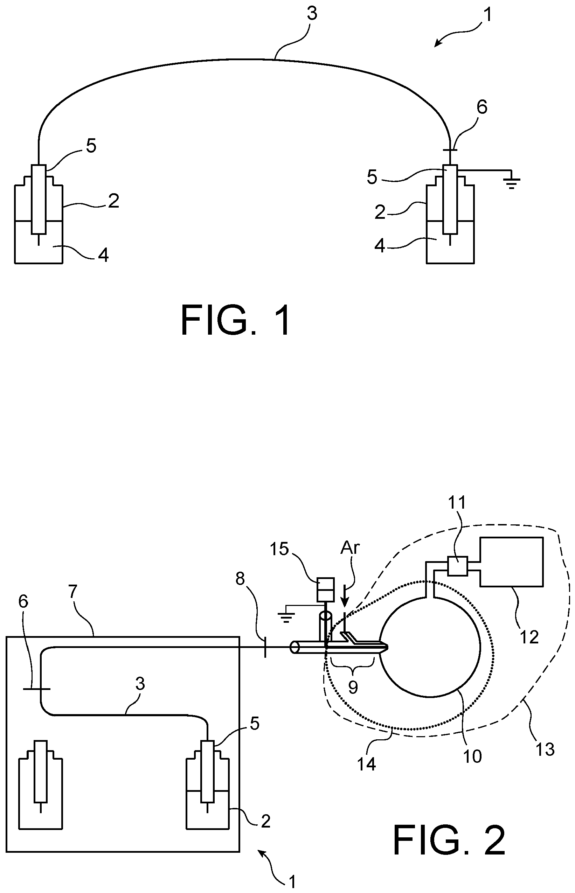

Un appareil classique d'électrophorèse capillaire 1 est représenté de manière simplifiée sur la figure 1. Il comporte deux réservoirs 2 reliés par un capillaire 3, chaque réservoir contenant un électrolyte de séparation 4 et une électrode 5, et un générateur de tension (non représenté) qui permet d'appliquer une différence de potentiel électrique entre les deux électrodes. Une des électrodes est reliée au générateur de tension et l'autre électrode est reliée à la masse. Un détecteur 6, par exemple un détecteur UV, est disposé à proximité de l'extrémité de sortie du capillaire.

La grandeur obtenue directement par le détecteur qui est utilisé pour détecter les analytes séparés par CE est le temps de migration, noté $t_m$. Ce temps de migration dépend des conditions instrumentales, à savoir la tension appliquée, la longueur totale du capillaire et la longueur séparant l'entrée du capillaire et le détecteur. Cette grandeur n'est donc pas idéale pour caractériser une séparation par CE.

La mobilité apparente est une grandeur dérivée du temps de migration et qui ne dépend ni de la tension appliquée, ni des longueurs ci-dessus. La mobilité apparente d'une espèce est notée $\mu_{app}$ et est définie comme étant la somme de deux termes :

-    le premier terme représente la mobilité de l'espèce, qui est due à sa charge et à son rayon hydrodynamique. Ce terme est noté $\mu_{ep}$ et est appelé « mobilité électrophorétique » ;

-   le second terme représente la mobilité due au flux électroosmotique et aux écoulements hydrodynamiques. Ce terme est noté $\mu_{eo}$ et est appelé « mobilité électroosmotique ».

La mobilité apparente est donc donnée par l'équation (1) suivante :

$$\mu_{app} = \mu_{ep} + \mu_{eo}$$

Cette mobilité apparente est liée au temps de migration $t_m$ de l'analyte selon l'équation (2) suivante :

$$\mu_{app} = \frac{(L \times L_{det})}{(U \times t_m)}$$

avec L la longueur du capillaire (en cm), $L_{det}$ la longueur entre l'entrée du capillaire et le détecteur (en cm), U la tension appliquée aux extrémités du capillaire (en V), $t_m$ le temps de migration de l'analyte (en s).

La mobilité électroosmotique $\mu_{eo}$ est commune à tous les analytes. Elle peut se calculer avec le temps de migration d'une espèce électriquement neutre. La mobilité électrophorétique d'une espèce électriquement neutre étant nulle, sa mobilité apparente est égale à la mobilité électroosmotique, selon l'équation (3) suivante :

$$\mu_{eo} = \frac{(L \times L_{det})}{(U \times t_{eo})}$$

avec L la longueur du capillaire (en cm), $L_{det}$ la longueur entre l'entrée du capillaire et le détecteur (en cm), U la tension appliquée aux extrémités du capillaire (en V), $t_{eo}$ le temps de migration d'une espèce électriquement neutre (en s).

La mobilité électrophorétique $\mu_{ep}$ d'un analyte est donc égale à la mobilité apparente $\mu_{app}$, à laquelle on soustrait la mobilité électroosmotique $\mu_{eo}$, selon l'équation (4) suivante :

$$\mu_{ep} = \mu_{app} - \mu_{eo} = \frac{(L \times L_{det})}{(U \times t_m)} - \frac{(L \times L_{det})}{(U \times t_{eo})}$$

avec L la longueur du capillaire (en cm), $L_{det}$ la longueur entre l'entrée du capillaire et le détecteur (en cm), U la tension appliquée aux extrémités du capillaire (en V), $t_m$ le temps de migration de l'analyte (en s) et $t_{eo}$ le temps de migration d'une espèce électriquement neutre (en s).

Dans le cas des études de spéciation, la mobilité électrophorétique $\mu_{ep}$ est une grandeur importante. Cette mobilité est en effet caractéristique de l'espèce chimique présente en solution. Connaître la mobilité électrophorétique d'un analyte avec précision nous donne de précieuses informations sur la nature de l'espèce présente en solution, et donc sur la spéciation de l'élément dans l'échantillon.

Dans le cas des études de spéciation par couplage CE-ICP-MS, les temps de migration $t_m$ des analytes sont mesurés en utilisant l'ICP-MS comme détecteur. Il est ainsi possible de déterminer précisément la mobilité apparente $\mu_{app}$ de ces analytes.

La détermination de la mobilité électroosmotique $\mu_{eo}$ revient quant à elle à mesurer avec justesse et précision le temps de migration $t_{eo}$ d'une espèce électriquement neutre. Actuellement, la plupart des méthodes de mesure de la mobilité électroosmotique $\mu_{eo}$ pour des couplages CE-ICP-MS utilisent un détecteur autre que l'ICP-MS, qui est donc ajouté au montage expérimental.

Le plus courant d'entre eux est un détecteur UV, qui est présent sur la plupart des instruments commerciaux de CE. Ce détecteur UV comporte une source de rayonnement UV et un moyen de détection, généralement une barrette de diodes, permettant le suivi de l'absorbance de l'échantillon à différentes longueurs d'ondes. Les avantages de ce type de détecteur sont sa simplicité et son faible coût.

L'utilisation d'un détecteur UV pour mesurer la mobilité électroosmotique nécessite cependant l'ajout, dans l'échantillon à analyser, d'une molécule neutre absorbant dans l'UV. De plus, lors d'un couplage CE-ICP-MS, l'appareil de CE n'est pas utilisé dans sa configuration classique. Les contraintes dues à la géométrie de l'appareil de CE imposent dans ce cas que le détecteur UV soit placé à une distance comprise entre 15 et 25 cm de l'entrée du capillaire. La mesure du temps $t_{eo}$ par UV ne tient donc pas compte des perturbations qui peuvent avoir lieu entre le détecteur UV et l'ICP-MS.

Un second type de détecteur est couramment employé pour détecter les molécules neutres. Il s'agit d'un détecteur à conductimétrie sans contact. Il comporte deux électrodes tubulaires, qui sont traversées par le capillaire de la CE. Un champ électrique alternatif de haute fréquence est appliqué sur ces deux électrodes, et le courant passant à travers le capillaire est mesuré. À partir de ce courant mesuré, il est possible de calculer la conductivité de l'échantillon. Lors de l'arrivée d'un analyte dans le détecteur, la conductivité de la solution change et l'analyte est donc détecté. Ce détecteur à conductimétrie sans contact est universel, c'est-à-dire qu'il est capable de détecter tous types d'analytes. Cependant, le signal obtenu n'est pas spécifique aux analytes d'intérêt et est difficile à interpréter. De plus, la détection s'opère à une distance supérieure à 20 cm de la sortie du capillaire, encore une fois du fait des contraintes instrumentales. Des perturbations peuvent donc encore avoir lieu, notamment à l'interface entre la CE et l'ICP-MS.

L'utilisation d'un autre détecteur que l'ICP-MS est donc en soi un inconvénient, du fait de la possibilité de perturbations entre ce détecteur et l'ICP-MS.

De plus, le montage expérimental est plus complexe si plusieurs détecteurs différents sont utilisés.

Enfin, l'utilisation de plusieurs détecteurs nécessite le démarrage simultané de ceux-ci au début de la séparation, et donc l'utilisation d'une connectique plus complexe. Afin de donner un ordre d'idée de la complexité d'un montage expérimental employant tous ces détecteurs (détecteur UV, détecteur à conductimétrie sans contact et ICP-MS), un schéma est présenté dans la figure 2.

Pour éviter d'ajouter un détecteur supplémentaire au montage CE-ICP-MS, on peut envisager de mesurer le temps de migration $t_{eo}$ d'une espèce électriquement neutre par ICP-MS.

Pour ce faire, une première méthode utilisée dans la littérature consiste à ajouter, à l'échantillon à analyser, une molécule électriquement neutre comportant au moins un élément chimique détectable par ICP-MS. Généralement, la molécule neutre est une molécule organique bromée, comme le bromopropane ou le bromoéthanol. Cependant, l'utilisation d'une molécule organique bromée en tant que marqueur de mobilité électroosmotique est problématique du fait des larges pics qui sont obtenus par l'ICP-MS avec ce type de molécules, ce qui fait que la détermination de la mobilité électroosmotique est imprécise. En outre, les molécules organiques bromées sont toxiques.

Une seconde méthode consiste à utiliser, comme marqueur de mobilité électroosmotique, un cation métallique et à neutraliser sa charge positive par complexation avec une molécule chargée négativement, appelée ligand. Des travaux menés sur des complexes cobalt-acétylacétone ont ainsi montré que ce type de complexe pouvait être utilisé en tant que marqueur de mobilité électroosmotique (document [1]). Dans cette étude, les auteurs utilisent ce complexe cobalt-acétylacétone afin de réaliser le suivi d'une réaction entre une molécule anti cancer (le cisplatine) et la guanosine monophosphate. L'échantillon à analyser est un mélange relativement simple, dans lequel les seuls éléments métalliques sont le platine et le cobalt. Dans ces conditions, les auteurs montrent que le complexe cobalt-acétylacétone est stable durant la séparation et qu'il constitue effectivement un marqueur de la mobilité électroosmotique. Il est cependant possible que l'acétylacétone forme un complexe avec d'autres éléments métalliques contenus dans l'échantillon. Cela peut notamment être le cas dans des échantillons dans lesquels de nombreux métaux différents sont présents. Or, une interaction entre les analytes et le marqueur de mobilité électroosmotique est inacceptable, car ces interactions changent le temps de migration des analytes et détériorent la séparation.

Les inventeurs se sont fixé comme objectif de trouver une méthode de détermination précise de la mobilité électroosmotique lors du couplage d'une technique CE-ICP-MS qui ne présenterait pas les inconvénients de l'art antérieur. Comme nous allons le voir ci-dessous, cette méthode s'applique également lors du couplage d'une technique CE-ICP-AES ou d'une technique CE-ESI-MS.

**EXPOSÉ DE L'INVENTION**

Cet objectif est atteint grâce à l'utilisation d'un complexe de l'acide 1,4,7-triazacyclononane-N,N',N''-triacétique avec un ion métallique de degré d'oxydation +III choisi parmi le gallium(III), l'indium(III) et le fer(III) comme marqueur électriquement neutre de la mobilité électroosmotique des analytes contenus dans une solution aqueuse à analyser à l'aide d'un dispositif d'électrophorèse capillaire (CE) relié par couplage direct à un spectromètre de masse choisi parmi un spectromètre de masse à plasma à couplage inductif (ICP-MS), un spectromètre de masse d'émission atomique (ICP-OES) et un spectromètre de masse à source électrospray (ESI-MS).

De préférence, on s'intéressera en particulier à l'utilisation du complexe de gallium(III) de l'acide 1,4,7-triazacyclononane-N,N',N''-triacétique comme marqueur électriquement neutre de la mobilité électroosmotique des analytes contenus dans une solution aqueuse à analyser à l'aide d'un dispositif d'électrophorèse capillaire (CE) relié par couplage direct à un spectromètre de masse à plasma à couplage inductif (ICP-MS).

L'invention concerne également un procédé pour déterminer la mobilité électrophorétique ($\mu_{ep}$) d'un analyte contenu dans une solution aqueuse à analyser à l'aide d'un dispositif d'électrophorèse capillaire (CE) relié par couplage direct à un spectromètre de masse choisi parmi un spectromètre de masse au plasma à couplage inductif (ICP-MS), un spectromètre de masse d'émission atomique (ICP-OES) et un spectromètre de masse à source électrospray (ESI-MS), le procédé comprenant les étapes successives suivantes :

- l'injection, dans le capillaire du dispositif CE, d'un mélange comprenant la solution aqueuse à analyser contenant l'analyte, un électrolyte de séparation et un marqueur de la mobilité électroosmotique ;
- la séparation, à l'aide du dispositif CE, des espèces contenues dans le mélange en fonction de leur charge et de leur rayon hydrodynamique;
- la mesure, à l'aide du spectromètre de masse, du temps de migration ($t_m$) de l'analyte et du temps de migration ($t_{eo}$) du marqueur de mobilité ;
- la détermination, d'une part, de la mobilité apparente ($\mu_{app}$) de l'analyte à partir du temps de migration ($t_m$) de l'analyte, et d'autre part, de la mobilité électroosmotique ($\mu_{eo}$) à partir du temps de migration ($t_{eo}$) du marqueur de mobilité ;
- la détermination de la mobilité électrophorétique ($\mu_{ep}$) de l'analyte à partir de sa mobilité apparente ($\mu_{app}$) et de la mobilité électroosmotique ($\mu_{eo}$) ;

dans lequel le marqueur de mobilité électroosmotique est un complexe de l'acide 1,4,7-triazacyclononane-N,N',N"-triacétique avec un ion métallique de degré d'oxydation +IIIchoisi parmi le gallium(III), l'indium(III) et le fer(III).

Il est à noter que l'on utilise le pluriel « les analytes » lorsqu'on cherche à déterminer la mobilité électroosmotique des analytes contenus dans la solution aqueuse à analyser et le singulier « l'analyte » lorsqu'on cherche à déterminer la mobilité électrophorétique d'un analyte contenu dans la solution aqueuse à analyser, car la mobilité électroosmotique est commune à tous les analytes, ce qui n'est pas le cas pour la mobilité électrophorétique.

De préférence, on utilisera en particulier, comme spectromètre de masse, un spectromètre de masse au plasma à couplage inductif (ICP-MS) et, comme marqueur de la mobilité électroosmotique, le complexe de gallium(III) de l'acide 1,4,7-triazacyclononane-N,N',N"-triacétique.

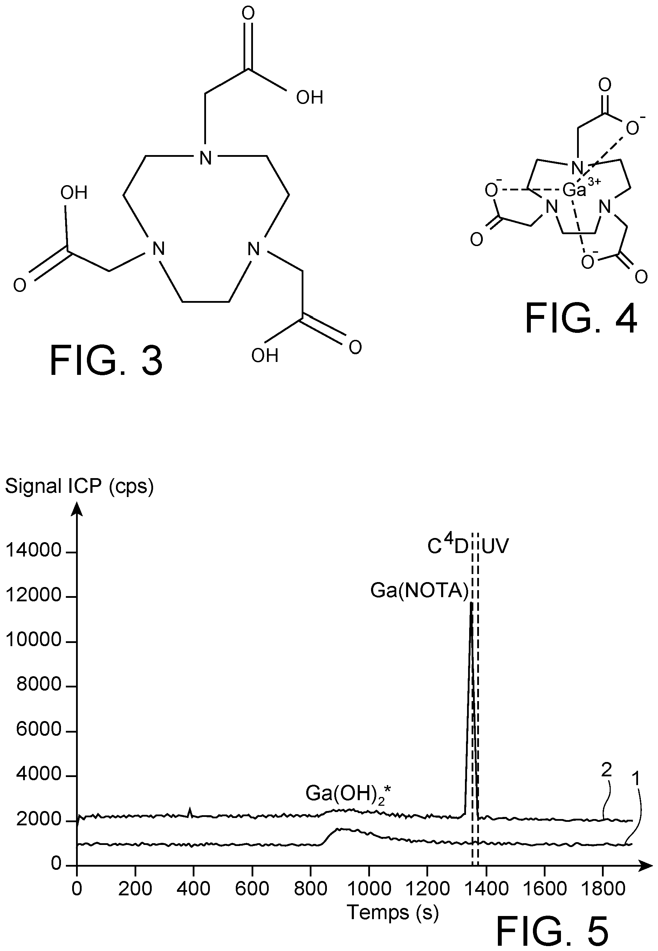

L'acide 1,4,7-triazacyclononane-N,N',N"-triacétique est connu sous l'appellation abrégée NOTA. Sa formule semi-développée est présentée dans la figure 3. Cette molécule est un macrocycle qui appartient à la famille des polyaminocarboxylates. Elle comporte trois fonctions carboxylates.

Le gallium convient parfaitement pour former un complexe stable avec le NOTA (figure 4). En effet, le gallium est présent à l'état d'oxydation +III en solution aqueuse et va donc former, avec le NOTA qui comporte trois fonctions carboxylates, un complexe de charge globale nulle. En outre, le gallium est détectable à l'ICP-MS et sa constante de complexation avec le NOTA est extrêmement haute, avec une valeur de $10^{30,98}$. Le complexe gallium-NOTA est donc très stable en solution aqueuse et convient donc parfaitement à une utilisation comme marqueur de la mobilité électroosmotique d'un analyte lors d'un couplage CE-ICP-MS.

Enfin, il est nécessaire que l'espèce métallique utilisée dans le complexe ne soit pas celle d'un élément d'intérêt pour notre analyse. C'est le cas du gallium, qui est absent de la majorité des échantillons d'intérêt dans les sciences du vivant et dans l'industrie nucléaire.

Il est à noter que les complexes de gallium-NOTA sont utilisés dans le domaine des sciences du vivant, notamment pour la technique d'imagerie de tomographie par émission de positrons (PET) (document [2]). Dans ce cas, l'isotope du gallium qui est utilisé est un isotope non naturel du gallium, le $^{68}$Ga, qui est radioactif et se désintègre avec émission d'une particule $\beta^+$. L'application du gallium-NOTA en PET est rendue possible par la constante de complexation extrêmement élevée entre le NOTA et le gallium, qui permet d'éviter que l'isotope radioactif injecté au patient soit incorporé par celui-ci.

Dans le mode de réalisation illustrant l'invention, nous utiliserons une solution de gallium d'isotopie naturelle, avec la composition suivante : 60,11 % en pourcentage atomique de $^{69}$Ga et 39,89 % en pourcentage atomique de [71]Ga.

En résumé, le complexe Gallium-NOTA est particulièrement adapté à une utilisation comme marqueur de la mobilité électroosmotique lors d'un couplage CE-ICP-MS, car il s'agit d'un complexe métallique qui est détectable par ICP-MS et qui satisfait aux critères suivants :

- il est stable à l'échelle de temps de la séparation, c'est-à-dire qu'il ne se dissocie pas pendant le temps d'analyse ;
- il existe sous une seule forme chimique en solution ;
- il est électriquement neutre (c'est-à-dire qu'il a une charge globale nulle) ;
- il est soluble en solution aqueuse ;
- il est détectable à l'ICP-MS sous forme d'un pic d'une durée comprise entre 10 et 300 s ;
- il n'a pas d'interactions susceptibles de changer le temps de migration des analytes; en particulier, il ne forme pas de complexes avec les cations métalliques de l'échantillon à analyser;
- il est disponible commercialement et/ou peut être très facilement synthétisable pour un prix bas ;
- il est injectable directement avec l'échantillon ;
- il est électriquement neutre et a donc une mobilité électrophorétique nulle.

À la place du gallium, on peut également utiliser l'indium ou le fer.

## BRÈVE DESCRIPTION DES DESSINS

La présente invention sera mieux comprise à la lecture de la description d'un exemple de réalisation, donné à titre purement indicatif et nullement limitatif, en faisant référence aux dessins annexés sur lesquels :

- la figure 1 est une représentation schématique d'un dispositif d'électrophorèse capillaire ;
- la figure 2 est un schéma du montage expérimental utilisé dans l'exemple de réalisation, comprenant un dispositif CE couplé à un détecteur ICP-MS, ainsi qu'un détecteur UV et un détecteur à conductimétrie sans contact ;
- la figure 3 représente la formule semi-développée du NOTA;
- la figure 4 représente la formule semi-développée du complexe Ga-NOTA ;
- la figure 5 est un électrophérogramme de séparation par CE-ICP-MS, l'échantillon étant du gallium en solution dans un électrolyte particulier (courbe 1) ou du Ga-NOTA en solution dans cet électrolyte (courbe 2) ;
- la figure 6a est un électrophérogramme de séparation par CE-ICP-MS, l'échantillon contenant du La, Lu, U, Th en solution à 1 ppm dans un électrolyte particulier ;
- la figure 6b est un électrophérogramme de séparation par CE-ICP-MS, l'échantillon contenant La, Lu, U, Th et Ga-NOTA en solution à 1 ppm dans l'électrolyte particulier.

## EXPOSÉ DÉTAILLÉ DE MODES DE RÉALISATION PARTICULIERS

Le complexe de gallium et de NOTA répond à tous les critères énoncés ci-dessus pour former un marqueur adéquat de la mobilité électroosmotique d'un analyte. Des expériences ont été menées pour s'assurer que ces critères sont vérifiés expérimentalement.

### Préparation du complexe gallium-NOTA

La préparation de complexes de gallium-NOTA a été effectuée en mettant à sec une solution aqueuse de nitrate de gallium à $1\ g.L^{-1}$, puis en remettant en solution le résidu obtenu avec une solution de NOTA à environ 14 $mmol.L^{-1}$. La solution de gallium et de NOTA est préparée de manière à ce que le gallium soit en très léger excès par rapport au NOTA, afin de s'assurer que tout le NOTA soit lié au métal.

Comme précisé précédemment, l'isotopie du gallium utilisé est naturelle (environ 60,11% en pourcentage atomique de $^{69}Ga$ et 39,89% en pourcentage atomique de $^{71}Ga$).

La solution de gallium et de NOTA est ensuite placée 10 minutes dans un bain d'ultrasons, puis 12 heures sur une plaque chauffante à 80°C.

### Montage expérimental

Le montage expérimental utilisé pour réaliser les analyses est représenté schématiquement dans la figure 2. Il comporte un dispositif d'électrophorèse capillaire CE 1 et un spectromètre ICP-MS 13. Nous avons ici utilisé un instrument de CE modèle 7100 CE commercialisé par la société Agilent et un ICP-MS modèle XSeries II commercialisé par la société Thermo.

Pour le dispositif CE 1, par souci de simplification, nous avons représenté le bâti 7 du dispositif CE, avec à l'intérieur, un réservoir 2 contenant l'électrolyte de séparation, une électrode 5 plongeant dans l'échantillon et reliée à un générateur (non représenté), le capillaire 3 (dans lequel l'échantillon a été préalablement injecté), le détecteur UV 6 et le détecteur conductimétrique 8.

En ce qui concerne le spectromètre ICP-MS 13, on rappelle qu'il comporte un système d'introduction de l'échantillon 14, une torche à plasma 11 (ICP) et un spectromètre de masse 12 (MS).

Le système d'introduction de l'échantillon 14 permet la formation d'un aérosol homogène. Ce système d'introduction 14 comprend un nébuliseur 9, alimenté par un gaz de nébulisation (ici de l'argon), et une chambre de nébulisation 10 (ici, une chambre cyclonique). L'ensemble des pièces de l'ICP-MS 13 est ici symbolisé par la forme délimitée par un trait discontinu ; l'ensemble des pièces du système d'introduction de l'échantillon 14 est symbolisé par la forme délimitée par un trait en pointillés.

Lors d'une analyse par ICP-MS, les ions sont séparés dans le spectromètre de masse en fonction de leur rapport masse/charge (m/z). La réponse de l'ICP-MS est donc spécifique à ce rapport m/z. Cette spécificité facilite l'interprétation des résultats d'une séparation par électrophorèse capillaire, par identification des éléments chimiques (par leur valeur de rapport m/z) présents dans les différents pics.

Pour réaliser le couplage direct entre le dispositif d'électrophorèse capillaire CE et le spectromètre ICP-MS, nous avons utilisé une interface commerciale de type MiraMist CE, commercialisée par la société Burgener Research. Cette interface comprend notamment un raccord en T comprenant une première entrée recevant le capillaire 3 du CE, une deuxième entrée recevant une électrode tubulaire qui est reliée à la terre et qui permet l'acheminement d'un liquide de compensation 15 (qui a la même composition que celle de l'électrolyte de séparation du CE), et une sortie raccordée au nébuliseur 9 de l'ICP-MS.

Dans le montage expérimental, le détecteur UV 6 du dispositif CE est disposé à une distance, comprise entre 15 et 25 cm, de l'entrée du capillaire ; il est réglé à une longueur d'onde de 254,4 nm.

Le montage expérimental comporte également un détecteur conductimétrique sans contact 8 (de type C⁴D, modèle « Tracedec » commercialisé par la société Innovative Sensor Technologies GmbH), qui est placé à une distance, comprise entre 50 et 80 cm, de l'entrée du capillaire.

Le capillaire 3 utilisé est en silice vierge et a un diamètre interne de 50 $\mu$m. La longueur du capillaire jusqu'au nébuliseur 9 de l'ICP-MS est comprise entre 80 et 120 cm.

Une carte électronique (non représentée) ayant une fonction trigger (carte Advantech PCI 1760) permet un déclenchement simultané des détecteurs conductimétrique et ICP-MS. Le détecteur UV étant intégré à l'appareil de CE, il se déclenche au début de la séparation.

*Validation expérimentale de l'utilisation du complexe gallium-NOTA en tant que marqueur de la mobilité électroosmotique*

Une première séparation est réalisée avec un échantillon (dit « échantillon témoin ») qui est uniquement composé de gallium non complexé par le NOTA et d'uracile (molécule absorbant dans l'UV), en solution dans l'électrolyte de séparation. Le gallium est en solution à 1 ppm dans l'électrolyte.

Une seconde séparation est réalisée avec un échantillon de gallium complexé par le NOTA et d'uracile, en solution dans l'électrolyte de séparation. Le Ga-NOTA est en solution à 1 ppm dans l'électrolyte.

Les deux séparations ont été réalisées en utilisant comme électrolyte de séparation de l'acide acétique à 0,4 mol.L$^{-1}$ ajusté à pH 3 par de la soude NaOH.

Une tension de séparation de 25 kV a été appliquée.

Une surpression de 74 mbar a été appliquée, afin d'accélérer l'analyse ; le flux électroosmotique est en effet très faible à pH 3.

Les résultats obtenus sont présentés dans la figure 5.

Pour l'électrophérogramme correspondant à l'échantillon témoin de gallium non complexé par le NOTA (courbe 1), un pic large et aplati est obtenu pour l'isotope $^{69}$Ga.

Si le gallium était présent sous forme Ga$^{3+}$ en solution aqueuse, le pic obtenu serait fin (pic d'une durée inférieure à 60 secondes) et migrerait avant les pics correspondant aux espèces électriquement neutres (visibles sous la forme de deux barres verticales sur la courbe 1). La faible intensité et la forme aplatie du pic obtenu pour l'échantillon témoin de gallium non complexé (courbe 1) sont donc probablement dues au fait que le gallium est hydrolysé en l'absence de complexant fort. L'hydrolyse du gallium commence en effet à pH très acide en l'absence de complexant. Le pic observé sur l'électrophérogramme (courbe 1) est ainsi attribué à une espèce hydrolysée du gallium.

Dans le cas de l'électrophérogramme correspondant à l'échantillon de gallium complexé par le NOTA (courbe 2), deux pics sont visibles pour l'isotope $^{69}$Ga. Le premier pic correspond au gallium non complexé, son temps de migration étant identique à celui de l'échantillon témoin. Le second pic est beaucoup plus fin et plus intense, et correspond à la forme complexée du gallium. Le gallium complexé est en effet protégé de l'hydrolyse par la complexation, ce qui explique cette augmentation de signal.

On constate également que le temps de migration obtenu pour le complexe gallium-NOTA à l'aide de l'ICP-MS est très proche de celui obtenu avec les deux autres détecteurs (UV et C⁴D, indiquées par deux lignes verticales en pointillés). Les écarts relatifs obtenus entre les temps de migration du complexe gallium-NOTA et les temps de migration obtenus par UV et par conductimétrie sont en effet inférieurs à 2%.

Afin de déterminer la répétabilité sur ces mesures, trois injections et séparations ont été réalisées à la suite. Ces injections ont permis de calculer les incertitudes à k=2 sur les mesures via la méthode de Kragten (décrite dans le document [3]).

Les résultats des mobilités électroosmotiques obtenues pour ces trois séparations successives (selon l'équation (3)) sont présentés dans le Tableau 1 ci-dessous.

Tableau 1 - Mobilités électroosmotiques obtenues pour trois séparations

| Détecteur | Mobilité électroosmotique ($10^{-5}$ cm$^2$.V$^{-1}$.s$^{-1}$) |
|---|---|
| ICP-MS | 35,1 ± 0,4 |
| UV | 35,5 ± 0,3 |
| Conductimétrique | 34,6 ± 0,4 |

On constate que les valeurs obtenues par ICP-MS se recoupent avec celles obtenues avec les deux autres détecteurs. En revanche, il n'existe pas de domaine commun entre les valeurs obtenues par UV et par conductimétrie.

Afin de révéler la sensibilité de la mesure obtenue par UV à la distance ($L_{det}$) entre l'entrée du capillaire et le détecteur utilisé, la contribution de la mesure de $L_{det}$ sur l'incertitude finale a été calculée pour les trois détecteurs (en pourcentage par rapport aux autres sources d'incertitude). Les résultats sont présentés dans le Tableau 2.

Tableau 2 - Pourcentage de l'incertitude due à la mesure de $L_{det}$ pour les trois détecteurs utilisés

| Détecteur | Pourcentage de l'incertitude due à la mesure de $L_{det}$ |
|---|---|
| UV | 26% |
| ICP-MS | 0,56% |
| Conductimétrique | 0,87 % |

Dans le cas du détecteur UV, une contribution importante de la mesure de la longueur du capillaire jusqu'au détecteur est observée. Cela traduit la sensibilité de la valeur de la mobilité électroosmotique à cette longueur $L_{det}$ dans le cas d'une détection par UV. Ce n'est pas le cas pour les détecteurs conductimétrique et ICP-MS.

Comme on l'a constaté, les incertitudes obtenues avec l'utilisation de l'ICP-MS, comme détecteur de la mobilité électroosmotique, sont du même ordre de grandeur que celles obtenues avec les deux autres détecteurs, tout en simplifiant grandement le montage expérimental et en simplifiant l'interprétation des données.

Au vu des résultats de ces expériences, l'utilisation du complexe gallium-NOTA en tant que marqueur de mobilité électroosmotique est validée.

*Validation expérimentale de l'utilisation du complexe gallium-NOTA pour déterminer la mobilité électrophorétique d'un analyte*

Pour valider l'utilisation du complexe gallium-NOTA en tant que marqueur de mobilité électroosmotique, afin de déterminer la mobilité électrophorétique d'un analyte, des séparations actinides-lanthanides en conditions réelles ont également été réalisées.

Les deux échantillons à analyser sont constitués d'un même mélange d'uranium, de thorium, de lanthane et de lutétium, en absence ou en présence de complexe gallium-NOTA, à 1 ppm en solution dans l'électrolyte de séparation (acide acétique 0,4 mol.L$^{-1}$ ajusté à pH 3 par NaOH). Comme précédemment, on applique une tension de séparation de 25kV et une pression de 74 mbar.

Les deux séparations réalisées par CE vont permettre de vérifier que le critère de non-perturbation de la séparation par le complexe gallium-NOTA est respecté.

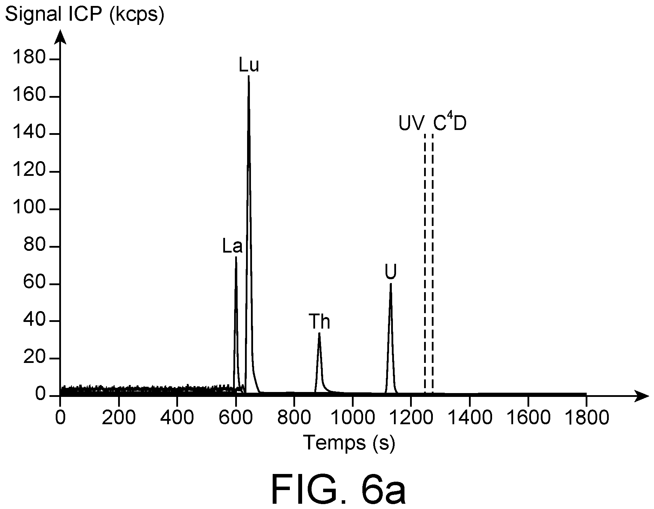

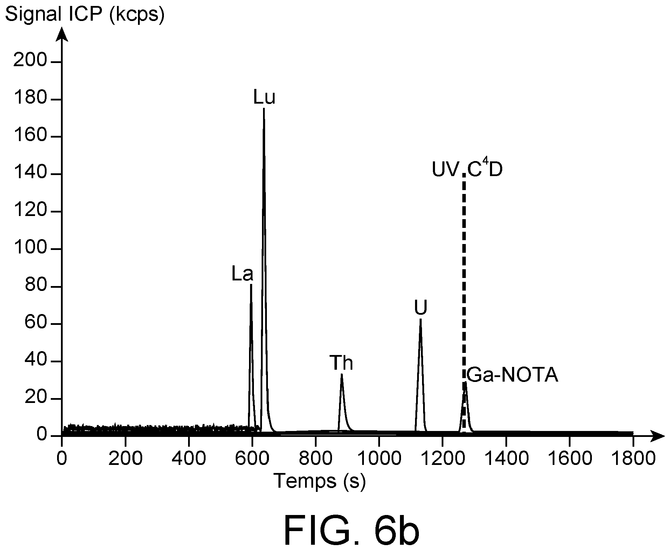

Les électrophérogrammes des deux séparations sont présentés respectivement dans la figure 6a (séparation en absence de complexe gallium-NOTA) et dans la figure 6b (séparation en présence de complexe gallium-NOTA).

On a également reporté, sur ces graphes, le temps de migration mesuré à l'aide des deux autres détecteurs (UV et C$^4$D, indiqué par une ou deux lignes verticales en pointillés) pour les molécules neutres (C$^4$D) et l'uracile (UV) (figure 6a) et pour le complexe gallium-NOTA (figure 6b).

Les mobilités apparentes pour chacun des analytes pour ces deux séparations, en présence ou en absence de Gallium-NOTA (exprimées avec une incertitude de 1%, qui a été évaluée précédemment), sont présentées dans le Tableau 3.

Tableau 3 - Mobilité apparente des analytes, en présence ou en absence de Gallium-NOTA

| Analyte | Mobilité apparente ($10^{-5}$ cm$^2$.V$^{-1}$.s$^{-1}$) | |
|---|---|---|
| | en absence de complexe gallium-NOTA | en présence de complexe gallium-NOTA |
| Uracile | 33,3 $\pm$ 0,3 | 33,6 $\pm$ 0,3 |
| Molécules neutres | 33,9 $\pm$ 0,3 | 34,1 $\pm$ 0,3 |
| Ga | / | 34,2 $\pm$ 0,3 |
| U | 38,4 $\pm$ 0,4 | 38,4 $\pm$ 0,4 |
| Th | 49,0 $\pm$ 0,5 | 49,3 $\pm$ 0,5 |
| Lu | 67,3 $\pm$ 0,7 | 68,3 $\pm$ 0,7 |

(suite)

| Analyte | Mobilité apparente ($10^{-5}$ cm$^2$.V$^{-1}$.s$^{-1}$) | |
|---------|---------------------------------------------|---------------------------------------------|
| | en absence de complexe gallium-NOTA | en présence de complexe gallium-NOTA |
| La | 72,3 ± 0,7 | 72,9 ± 0,7 |

On constate que les temps de migration $t_m$ et donc les mobilités apparentes $\mu_{app}$ des analytes sont identiques en présence ou en absence de complexe gallium-NOTA. Cela indique que la complexation du NOTA avec le gallium n'est pas déplacée par la présence d'autres métaux parmi ceux testés, et notamment les lanthanides (qui ont un degré d'oxydation +III). Le NOTA ne complexe donc pas avec les lanthanides trivalents (Lu(III), La(III)), le thorium tétravalent (Th(IV)) ou le cation uranyle (U(VI)). Le critère de non-perturbation de la séparation est donc respecté.

*Validation expérimentale de la robustesse de la méthode*

Afin de poursuivre ces expériences préliminaires, le complexe gallium-NOTA a été testé lors de la réalisation d'une étude de complexation entre les lanthanides et un autre électrolyte, l'acide 2-hydroxy-2-méthyl-butyrique (HMBA).

36 séparations ont été réalisées, sur lesquelles le temps de migration des molécules a été acquis à l'aide d'un détecteur conductimétrique et à l'aide d'un détecteur ICP-MS, en présence du complexe gallium-NOTA.

L'écart-relatif entre les mobilités apparentes mesurées par conductimétrie et mesurées par ICP-MS en utilisant le complexe gallium-NOTA est inférieur à 1,5% pour les 36 séparations effectuées. Ces résultats confirment donc la robustesse du complexe gallium-NOTA en tant que marqueur neutre pour la détermination de la mobilité électroosmotique par ICP-MS. L'utilisation du complexe gallium-NOTA permet donc une mesure, précise et juste, du temps de migration par ICP-MS, afin d'accéder à la mobilité électroosmotique de manière juste et précise lors de couplages CE-ICP-MS et, ainsi, obtenir la mobilité électrophorétique des analytes.

Il a en outre été constaté, pour ces mesures, que le traitement des données était grandement facilité par l'utilisation d'un marqueur électriquement neutre et visible à l'ICP-MS. En effet, toutes les données nécessaires pour calculer les mobilités électrophorétiques $\mu_{ep}$ des analytes sont directement obtenues sur le fichier de sortie de l'ICP-MS. L'utilisation d'un mini-programme de type macro qui exécute une tâche répétitive pour calculer les mobilités électrophorétiques des analytes directement depuis le fichier créé par l'ICP-MS est donc possible avec l'utilisation d'un complexe gallium-NOTA.

De plus, la visualisation du pic des analytes neutres est difficile avec le détecteur conductimétrique, car l'échantillon est en solution dans l'électrolyte de séparation, ce qui diminue la différence de conductivité entre l'échantillon et l'électrolyte de séparation, et donc la taille des pics visibles au détecteur conductimétrique.

Enfin, l'utilisation d'un seul détecteur simplifie le montage et fait donc gagner du temps à l'utilisateur. Le coût des analyses est ainsi réduit.

*Conclusion*

L'originalité du complexe gallium-NOTA en tant que marqueur neutre vient de l'utilisation d'un ligand polyaminocarboxylate macrocyclique en tant que complexant du gallium trivalent. L'exceptionnelle stabilité du complexe formé avec l'existence d'une unique forme 1:1 en solution aqueuse permet de s'assurer de la neutralité de l'espèce observée par ICP-MS et de la non-perturbation de la séparation par le ligand, qui est totalement lié au gallium.

Les modes de réalisation particuliers décrits ci-dessus pour illustrer l'invention ont porté sur l'analyse d'échantillons dans le domaine du nucléaire, mais il est tout à fait possible d'utiliser l'invention dans d'autres domaines.

À titre d'exemple, du fait de la stabilité du complexe gallium-NOTA sur une gamme étendue de pH (allant de 2 à 7), ce marqueur neutre peut également être utilisé dans le domaine des sciences du vivant (biodisponibilité, études de spéciation, etc.), où les couplages CE-ICP-MS sont fréquemment utilisés pour déterminer les interactions entre les métaux et les biomolécules.

L'analyse environnementale constitue un autre domaine d'application, du fait de l'emploi fréquent de couplages CE-ICP-MS pour réaliser des études sur les éléments présents à l'état de traces ou d'ultra-traces dans l'environnement (par exemple la mesure des traces d'arsenic ou de mercure dans l'eau).

**REFERENCES CITEES**

[1] Holtkamp H. U. et al., « Cobalt complexes as internai standards for capillary zone electrophoresis-mass spectrometry studies in biological inorganic chemistry », Journal of Biological Inorganic Chemistry, 22(5), 789-798 (2017)
[2] Velikyan I. et al., « Convenient Preparation of 68Ga-Based PET-Radiopharmaceuticals at Room Temperature », Bioconjugate Chemistry, 19(2), 569-573 (2008)
[3] Kragten J., « Calculating Standard Deviations and Confidence Intervals with a Universally Applicable Spreadsheet Technique », Analyst, 119, 2161-2165 (1994)

**Revendications**

1. Utilisation d'un complexe de l'acide 1,4,7-triazacyclononane-N,N',N"-triacétique avec un ion métallique de degré d'oxydation +III choisi parmi le gallium(III), l'indium(III) et le fer(III) comme marqueur électriquement neutre de la mobilité électroosmotique des analytes contenus dans une solution aqueuse à analyser à l'aide d'un dispositif d'électrophorèse capillaire (CE) relié par couplage direct à un spectromètre de masse choisi parmi un spectromètre de masse à plasma à couplage inductif (ICP-MS), un spectromètre de masse d'émission atomique (ICP-OES) et un spectromètre de masse à source électrospray (ESI-MS).

2. Procédé pour déterminer la mobilité électrophorétique ($\mu_{ep}$) d'un analyte contenu dans une solution aqueuse à analyser à l'aide d'un dispositif d'électrophorèse capillaire (CE) relié par couplage direct à un spectromètre de masse choisi parmi un spectromètre de masse au plasma à couplage inductif (ICP-MS), un spectromètre de masse d'émission atomique (ICP-OES) et un spectromètre de masse à source électrospray (ESI-MS), le procédé comprenant les étapes successives suivantes :

   - l'injection, dans le capillaire du dispositif CE, d'un mélange comprenant la solution aqueuse à analyser contenant l'analyte, un électrolyte de séparation et un marqueur de la mobilité électroosmotique ;
   - la séparation, à l'aide du dispositif CE, des espèces contenues dans le mélange en fonction de leur charge et de leur rayon hydrodynamique ;
   - la mesure, à l'aide du spectromètre de masse, du temps de migration ($t_m$) de l'analyte et du temps de migration ($t_{eo}$) du marqueur de mobilité ;
   - la détermination, d'une part, de la mobilité apparente ($\mu_{app}$) de l'analyte à partir du temps de migration ($t_m$) de l'analyte, et d'autre part, de la mobilité électroosmotique ($\mu_{eo}$) à partir du temps de migration ($t_{eo}$) du marqueur de mobilité ;
   - la détermination de la mobilité électrophorétique ($\mu_{ep}$) de l'analyte à partir de sa mobilité apparente ($\mu_{app}$) et de la mobilité électroosmotique ($\mu_{eo}$) ;

   dans lequel le marqueur de mobilité électroosmotique est un complexe de l'acide 1,4,7-triazacyclononane-N,N',N"-triacétique avec un ion métallique de degré d'oxydation +III choisi parmi le gallium(III), l'indium(III) et le fer(III).

**Patentansprüche**

1. Verwendung eines Komplexes der 1,4,7-Triazacyclononan-N,N',N"-Triessigsäure mit einem Metallion mit einem Oxidationsgrad +III, ausgewählt aus Gallium(III), Indium(III) und Eisen(III) als elektrisch neutralen Marker der elektroosmotischen Mobilität der Analyten, die in einer wässrigen Lösung enthalten sind, die mithilfe einer Vorrichtung zur Kapillarelektrophorese (CE) zu analysieren ist, die durch direkte Kopplung an ein Massenspektrometer angeschlossen ist, das aus einem Massenspektrometer mit induktiv gekoppeltem Plasma (ICP-MS), einem Atomemissions-Massenspektrometer (ICP-OES) und einem Elektrosprayquellen-Massenspektrometer (ESI-MS) ausgewählt ist.

2. Verfahren zum Bestimmen der elektrophoretischen Mobilität ($\mu_{ep}$) eines Analyten, der in einer wässrigen Lösung enthalten ist, die mithilfe einer Vorrichtung zur Kapillarelektrophorese (CE) zu analysieren ist, die durch direkte Kopplung an einen Massenspektrometer angeschlossen ist, der aus einem Massenspektrometer mit induktiv gekoppeltem Plasma (ICP-MS), einem Atomemissions-Massenspektrometer (ICP-OES) und einem Elektrosprayquellen-Massenspektrometer (ESI-MS) ausgewählt ist, wobei das Verfahren die folgenden aufeinanderfolgenden Schritte umfasst:

   - das Injizieren in die Kapillare der CE-Vorrichtung eines Gemisches, das die zu analysierende wässrige Lösung umfasst, die den Analyten, ein Abscheidungselektrolyt und einen Marker der elektroosmotischen Mobilität enthält;

- das Abscheiden mithilfe der CE-Vorrichtung der Spezies, die in dem Gemisch enthalten sind, in Abhängigkeit von ihrer Aufladung und ihrem hydrodynamischen Radius;
- das Messen mithilfe des Massenspektrometers der Migrationsdauer ($t_m$) des Analyten und der Migrationsdauer ($t_{eo}$) des Mobilitätsmarkers;
- das Bestimmen einerseits der erkennbaren Mobilität ($\mu_{app}$) des Analyten ausgehend von der Migrationsdauer ($t_m$) des Analyten, und andererseits der elektroosmotischen Mobilität ($\mu_{eo}$) ausgehend von der Migrationsdauer ($t_{eo}$) des Mobilitätsmarkers;
- das Bestimmen elektrophoretischen Mobilität ($\mu_{eo}$) des Analyten ausgehend von seiner erkennbaren Mobilität ($\mu_{app}$) und der elektroosmotischen Mobilität ($\mu_{eo}$) ;

wobei der Marker der elektroosmotischen Mobilität ein Komplex der 1,4,7-Triazacyclononan-N,N',N"-Triessigsäure mit einem Metallion mit einem Oxidationsgrad +III, ausgewählt aus Gallium(III), Indium(III) und Eisen(III) ist.

## Claims

1. A use of a 1,4,7-triazacyclononane-N,N',N"-triacetic acid complex with a metal ion of oxidation state +III selected from gallium(III), indium (III) and iron(III) as an electrically neutral marker of the electroosmotic mobility of the analytes contained in an aqueous solution to be analysed using a capillary electrophoresis (CE) device connected by direct coupling to a mass spectrometer selected from an inductively coupled plasma mass spectrometer (ICP-MS), an atomic emission mass spectrometer (ICP-OES) and an electrospray source mass spectrometer (ESI-MS).

2. A method for determining the electrophoretic mobility ($\mu_{ep}$) of an analyte contained in an aqueous solution to be analysed using a capillary electrophoresis (CE) device connected by direct coupling to a mass spectrometer selected from an inductively coupled plasma mass spectrometer (ICP-MS), an atomic emission mass spectrometer (ICP-OES) and an electrospray source mass spectrometer (ESI-MS), the method comprising the following successive steps:

- injecting, into the capillary of the CE device, a mixture comprising the aqueous solution to be analysed containing the analyte, a separation electrolyte and an electroosmotic mobility marker;
- separating, using the CE device, the species contained in the mixture depending on their charge and their hydrodynamic radius;
- measuring, using the mass spectrometer, the migration time ($t_m$) of the analyte and the migration time ($t_{eo}$) of the mobility marker;
- determining, on the one hand, the apparent mobility ($\mu_{app}$) of the analyte from the migration time ($t_m$) of the analyte, and on the other hand, the electroosmotic mobility ($\mu_{eo}$) from the migration time ($t_{eo}$) of the mobility marker;
- determining the electrophoretic mobility ($\mu_{ep}$) of the analyte from its apparent mobility ($\mu_{app}$) and the electroosmotic mobility ($\mu_{eo}$);

wherein the electroosmotic mobility marker is a 1,4,7-triazacyclononane-N,N',N"-triacetic acid complex with a metal ion of oxidation state +III selected from gallium(III), indium (III) and iron(III).

FIG. 1

FIG. 2

FIG. 3

FIG. 4

FIG. 5

FIG. 6a

FIG. 6b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **HOLTKAMP H. U. et al.** Cobalt complexes as internai standards for capillary zone electrophoresis-mass spectrometry studies in biological inorganic chemistry. *Journal of Biological Inorganic Chemistry,* 2017, vol. 22 (5), 789-798

- **VELIKYAN I. et al.** Convenient Preparation of Ga-Based PET-Radiopharmaceuticals at Room Temperature. *Bioconjugate Chemistry,* 2008, vol. 19 (2), 569-573
- **KRAGTEN J.** Calculating Standard Deviations and Confidence Intervals with a Universally Applicable Spreadsheet Technique. *Analyst,* 1994, vol. 119, 2161-2165